# EUROPÄISCHE PATENTSCHRIFT

(11) **EP 3 189 725 B1**
(45) Veröffentlichungstag und Bekanntmachung des Hinweises auf die Patenterteilung: **12.09.2018**
(21) Anmeldenummer: 17150374.1
(22) Anmeldetag: 05.01.2017
(51) Int. Cl.: A01G 23/08

(54) **VORRICHTUNG ZUR BEARBEITUNG VON LAND- UND FORSTWIRTSCHAFTLICHEM SCHNITTGUT**
DEVICE FOR PROCESSING AGRICULTURAL AND FORESTRY CUTTINGS
DISPOSITIF DE TRAITEMENT DE MATIÈRES COUPÉES AGRICOLES OU FORESTIERS

(30) Priorität: 11.01.2016 AT 500112016
(43) Veröffentlichungstag der Anmeldung: 12.07.2017
(73) Patentinhaber: Steininger, Werner, 4722 Peuerbach (AT)
(72) Erfinder: Steininger, Werner, 4722 Peuerbach (AT)
(74) Vertreter: KLIMENT & HENHAPEL

(56) Entgegenhaltungen:
- WO-A1-93/23218
- WO-A1-2007/035083
- US-A- 5 975 166
- US-A1- 2010 071 808
- US-A1- 2011 132 495

## Beschreibung

Die Erfindung betrifft eine Vorrichtung zur Bearbeitung von land- und forstwirtschaftlichem Schnittgut, insbesondere zum Schneiden von Bäumen, mit einem Greif- und Schneidwerk, das mittels eines Befestigungselements am Auslegerarm einer Arbeitsmaschine befestigbar ist, wobei zwischen dem Befestigungselement und dem Greif- und Schneidwerk ein Drehwerk mit einem Antrieb zur Erzeugung einer Drehbewegung des Greif- und Schneidwerks relativ zum Befestigungselement um eine Drehachse des Drehwerks angeordnet ist, gemäß dem Oberbegriff von Anspruch 1.

Eine Vorrichtung zur Bearbeitung von Land-und forstwirtschaftlichem Schnittgut ist aus Dokument US-A-2011132495 bekannt.

In der Holzindustrie und der Land- und Forstwirtschaft werden etwa zum Schneiden von Bäumen große Arbeitsmaschinen eingesetzt, die an einem Auslegerarm mit einem Greif- und Schneidwerk versehen sind, mit deren Hilfe sie Baumstämme umfassen und durchtrennen können. Der Auslegerarm verfügt über eine Hydraulik, mit der der Auslegerarm bewegt werden kann. Das Greif- und Schneidwerk verfügt über einen Greifer, dessen Greifarme mit weiteren hydraulischen Elementen geöffnet und geschlossen werden können, wobei optional ein zusätzlicher Sammelgreifer vorgesehen sein kann, der ebenfalls hydraulisch geöffnet und geschlossen werden kann. Das Greif- und Schneidwerk verfügt des Weiteren in der Regel über ein Schneidwerk, das mit zusätzlichen hydraulischen Elementen den Schnittvorgang bewerkstelligt. Das Schneidwerk kann etwa in Form einer relativ zu einem Widerlager beweglichen Schwinge mit einer daran befestigten Schneidplatte ausgeführt sein und ermöglicht es die erfassten Baumstämme zu durchtrennen. In weiterer Folge kann der Auslegerarm in Zusammenwirken mit dem Drehwerk den Baum entweder zur Seite legen oder einer Maschine zur Zerkleinerung oder Weiterverarbeitung zuführen.
Wird ein Baumstamm umfasst, so ist das Greif- und Schneidwerk mit einer im Wesentlichen vertikalen Schwenkachse der Greifer und des Schneidwerks orientiert. Die Drehachse des Drehwerks ist dabei im Wesentlichen horizontal orientiert. Beim Ablegen eines durchtrennten Baumstammes wird das Drehwerk mithilfe seines Antriebes, der in der Regel als Hydraulikantrieb ausgeführt ist, so betätigt, dass das Greif- und Schneidwerk, das den Baumstamm unmittelbar nach dem Durchtrennen in einer im wesentlichen vertikalen Ausrichtung hält, in eine Position verschwenkt, in der der durchtrennte Baumstamm im wesentlichen horizontal ausgerichtet ist und am Boden abgelegt werden kann. Falls das Drehwerk dabei so positioniert ist, dass dessen Drehachse horizontal orientiert ist, wirken bei diesem Vorgang hohe Drehmomente auf das Drehwerk und dessen Hydraulikantriebe.

Starke Belastungen des Drehwerks und seines Antriebes können daher in der Praxis nicht vermieden werden. Eine ausreichende Schmierung des Drehwerks und seines Antriebes mit einem entsprechenden Schmiermittel ist daher entscheidend. Das Drehwerk kann etwa so ausgeführt sein, dass es einen Drehkranz umfasst, in dessen Umfangsbereich zumindest ein Hydraulikmotor angeordnet ist, der einen mit dem Drehkranz kämmenden Schneckentrieb aufweist. In diesem Fall ist etwa auf eine ausreichende Schmierung des Schneckentriebes sowie der inneren Drehkugellager zu achten. Dabei wäre es grundsätzlich auch denkbar, dass anstelle von Hydraulikmotoren Hydraulikzylinder verwendet werden, die beispielsweise über eine Zahnstange mit dem Drehkranz kämmen. Sofern in der vorliegenden Beschreibung von Hydraulikmotoren die Rede ist sind somit auch Hydraulikzylinder mitumfasst.

In der Praxis muss der Drehkranz und sein Antrieb nach einigen wenigen Betriebsstunden geschmiert werden, um den Verschleiß zu minimieren und die Arbeitsmaschine funktionsfähig zu erhalten. In herkömmlicher Weise muss eine solche Schmierung manuell erfolgen. Die Bedienperson muss hierfür den Betrieb der Arbeitsmaschine unterbrechen, um die Schmierung vorzunehmen. Die praktische Erfahrung zeigt, dass ein solcher Wartungsaufwand vom Anwender nicht immer wie vom Hersteller empfohlen durchgeführt wird und entweder eine unzureichende Schmierung vorgenommen wird, oder zu lange Wartungsintervalle gewählt werden, also nicht ausreichend oft geschmiert wird. Auf diese Weise wird der Verschleiß erhöht und die Lebensdauer der Arbeitsmaschine verringert.

Es ist daher das Ziel der Erfindung, auf möglichst kostengünstige und betriebssichere Weise den Verschleiß des Drehwerks und seines Antriebes bei einer gattungsgemäßen Vorrichtung zu verringern und die Lebensdauer somit zu erhöhen. Dabei soll der Bedienungsaufwand nicht erhöht, sondern im Gegenteil verringert werden.

Dieses Ziel wird durch die Merkmale von Anspruch 1 erreicht. Anspruch 1 bezieht sich auf eine Vorrichtung zur Bearbeitung von land- und forstwirtschaftlichem Schnittgut, insbesondere zum Schneiden von Bäumen, mit einem Greif- und Schneidwerk, das mittels eines Befestigungselements am Auslegerarm einer Arbeitsmaschine befestigbar ist, wobei zwischen dem Befestigungselement und dem Greif- und Schneidwerk ein Drehwerk mit einem Antrieb zur Erzeugung einer Drehbewegung des Greif- und Schneidwerks relativ zum Befestigungselement um eine Drehachse des Drehwerks angeordnet ist. Erfindungsgemäß wird dabei vorgeschlagen, dass am Befestigungselement ein Schmiermittelzylinder angeordnet ist, der über zumindest eine Schmiermittelleitung mit dem Drehwerk und/oder seinem Antrieb verbunden ist, wobei der Schmiermittelzylinder einen Verdrängerkolben zur Förderung des Schmiermittels über die zumindest eine Schmiermittelleitung aufweist, der mittels zumindest eines mit der Drehbewegung des Greif- und Schneidwerks mitbewegten Drehelements betätigt wird. Erfindungsgemäß wird somit eine automatische Schmierung sicher gestellt, die stets dann vorgenommen wird, wenn eine Drehbewegung des Greif- und Schneidwerks erfolgt, da der Verdrängerkolben zur Förderung des Schmiermittels von einem mit der Drehbewegung des Greif- und Schneidwerks mitbewegten Drehelement betätigt wird. Ein zusätzlicher Bedienungsaufwand für die Schmierung während des Betriebes der Arbeitsmaschine ist hierfür nicht erforderlich. Die Schmierung wird vielmehr durch eine Mechanik initiiert, die an die Drehbewegung des Greif- und Schneidwerks gekoppelt ist.

Diese Mechanik kann etwa so ausgeführt sein, dass das Drehelement mit dem Verdrängerkolben über eine die Drehbewegung des zumindest einen Drehelements in eine Hubbewegung des Verdrängerkolbens übersetzende Stellmechanik verbunden ist.

Insbesondere kann dabei vorgesehen sein, dass die Rotationsachse des zumindest einen Drehelements die Drehachse des Drehwerks ist und das Drehelement eine in einem Umfangsbereich des Drehelements verlaufende Anlagefläche für ein mit dem Verdrängerkolben verbundenes und linear bewegliches Stellelement aufweist, wobei die Anlagefläche einen variierenden Abstand von der Drehachse aufweist. Auf diese Weise kann erreicht werden, dass der Hub des Verdrängerkolbens vom Drehwinkel des Drehelements und somit des Greif- und Schneidwerks abhängig ist. Wie noch näher ausgeführt werden wird variiert in der betrieblichen Praxis das auf das Drehwerk wirkende Drehmoment in Abhängigkeit vom Drehwinkel, sodass die Schmierung je nach Drehstellung des Greif- und Schneidwerks und somit je nach Belastung optimiert werden kann.

Vorzugsweise liegt das Stellelement über eine Rolle an der Anlagefläche an, um das Zusammenwirken des Drehelements mit der Stellmechanik zu verbessern.

Ferner ist das Stellelement mit dem Verdrängerkolben vorzugsweise über einen Hebel verbunden, um die Auslegung der Stellmechanik und des Drehelements flexibler zu gestalten.

Die Erfindung wird in weiterer Folge anhand von Ausführungsbeispielen mithilfe der beiliegenden Figuren näher erläutert. Es zeigen hierbei die
Fig. 1 eine Explosionsdarstellung einer Ausführungsform eines Greif- und Schneidwerks gemäß dem Stand der Technik,
Fig. 2 das Greif- und Schneidwerk gemäß Fig. 1 bei geschlossenen Greifern, geschlossenem Sammelgreifer und geschlossenem Schneidwerk,
Fig. 3 das Greif- und Schneidwerk gemäß der Fig. 2 bei geöffneten Greifern, geöffnetem Sammelgreifer und geöffnetem Schneidwerk,
Fig. 4 eine Arbeitsmaschine mit Auslegerarm und einem daran befestigten Greif- und Schneidwerk in einer ersten Positionierung des Drehwerks,
Fig. 5 eine Arbeitsmaschine mit Auslegerarm und einem daran befestigten Greif- und Schneidwerk in einer zweiten Positionierung des Drehwerks,
Fig. 6 einen Schnitt durch die Ebene A-A gemäß der Fig. 6, bei dem das Drehelement, der Schmiermittelzylinder mit dem Verdrängerkolben und ein Teil der Stellmechanik gemäß einer Ausführungsform der Erfindung ersichtlich sind,
Fig. 7 eine Ansicht des Befestigungselements, bei der ein weiterer Teil der Stellmechanik ersichtlich ist, und die
Fig. 8 eine Darstellung der geförderten Schmiermittelmenge in Abhängigkeit vom Drehwinkel des Greif- und Schneidwerks gemäß einer Ausführungsform der Erfindung.

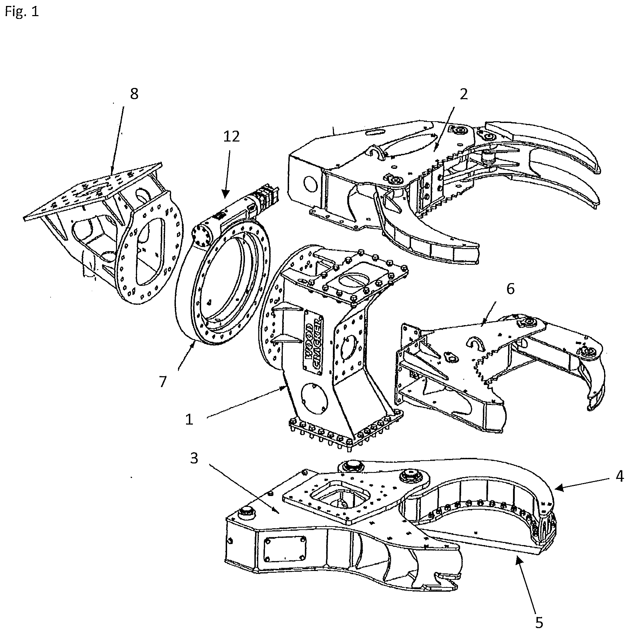

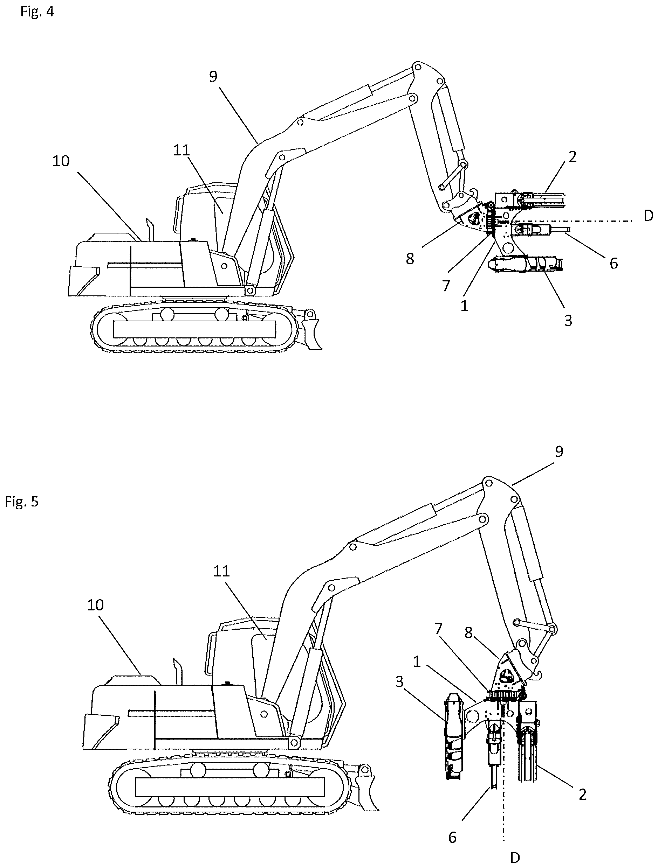

Anhand der Fig. 1 werden zunächst Aufbau und Funktion eines Drehwerks mit angebautem Greif- und Schneidwerk erläutert. An einem Mittelteil 1 eines Greif- und Schneidwerks ist ein Greifer 2 befestigt, dessen Greifarme hydraulisch geschlossen und geöffnet werden können. Aus Gründen der Übersichtlichkeit sind dabei die hydraulischen Leitungen nicht eingezeichnet. Des Weiteren ist am Mittelteil 1 ein Schneidwerk 3 befestigt, das mit zusätzlichen hydraulischen Elementen den Schnittvorgang bewerkstelligt. Im gezeigten Ausführungsbeispiel ist das Schneidwerk 3 in Form einer relativ zu einem Widerlager hydraulisch bewegten Schwinge 4 mit einer daran befestigten Schneidplatte 5 ausgeführt, die den erfassten Baumstamm durchtrennt. Optional kann ferner ein zusätzlicher Sammelgreifer 6 vorgesehen sein, der ebenfalls hydraulisch geöffnet und geschlossen werden kann. Die Bedienung der genannten hydraulischen Elemente erfolgt dabei über eine Bedienkanzel 11 einer Arbeitsmaschine 10, wie sie in den Fig. 4 und 5 ersichtlich ist.

Der Mittelteil 1 ist über ein Drehwerk 7 an einem Befestigungselement 8 montiert, über den das Greif- und Schneidwerk an einem Auslegerarm 9 der Arbeitsmaschine 10 befestigt werden kann. Die Bewegungen des Auslegerarms 9 werden somit über das Befestigungselement 8, das auch als Aufnahmebock bezeichnet wird, unmittelbar auf das Greif- und Schneidwerk übertragen. Über das Drehwerk 7 kann jedoch eine Rotationsbewegung des Greif- und Schneidwerks relativ zum Auslegerarm 9 bewerkstelligt werden. Hierfür ist ein Antrieb 12 vorgesehen, der im Ausführungsbeispiel gemäß der Fig. 1 als Hydraulikmotor ausgeführt ist, der im Umfangsbereich eines Drehkranzes des Drehwerks 7 angeordnet ist und einen Schneckentrieb aufweist, der mit dem Drehkranz kämmt.

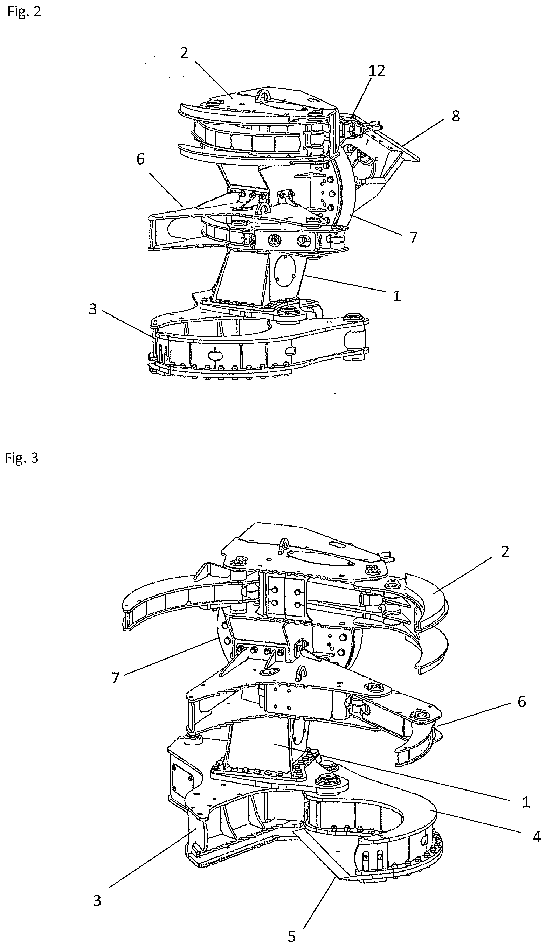

Die Fig. 2 zeigt das Greif- und Schneidwerk gemäß Fig. 1 bei geschlossenen Greifern 2, geschlossenem Sammelgreifer 6 und geschlossenem Schneidwerk 3. Die Fig. 3 zeigt das Greif- und Schneidwerk gemäß der Fig. 2 bei geöffneten Greifern 2, geöffnetem Sammelgreifer 6 und geöffnetem Schneidwerk 3.

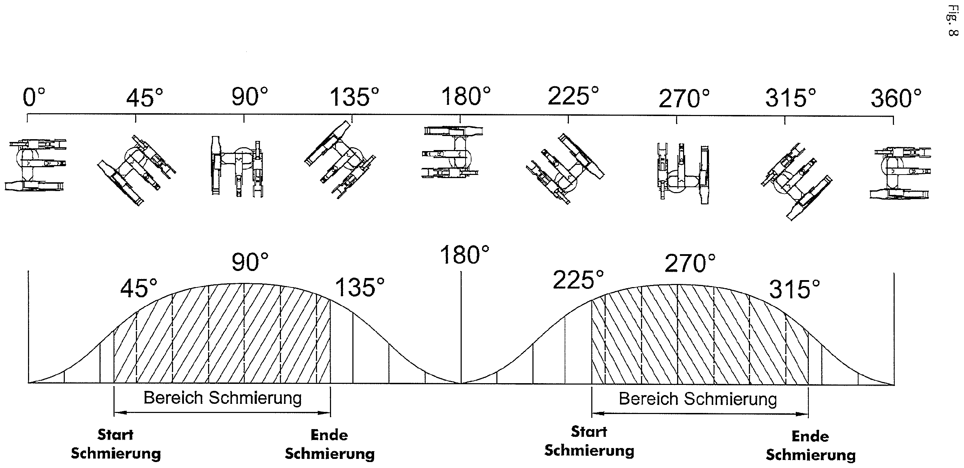

Die Fig. 4 zeigt eine Arbeitsstellung einer gattungsgemäßen Vorrichtung, bei der ein in der Fig. 4 nicht dargestellter Baumstamm umfasst wird, wobei das Greif- und Schneidwerk mit einer im Wesentlichen vertikalen Schwenkachse der Greifer 2 und des Schneidwerks 3 orientiert ist. Die Drehachse D des Drehwerks 7 ist dabei im Wesentlichen horizontal orientiert. Diese Arbeitsstellung entspricht dem Drehwinkel 0° gemäß der Fig. 8. Durch hydraulische Betätigung des Schneidwerks 3 wird der Baumstamm durchtrennt und vom Greifer 2 in einer im Wesentlichen vertikalen Ausrichtung festgehalten. Beim Ablegen des durchtrennten Baumstammes wird das Drehwerk 7 so betätigt, dass das Greif- und Schneidwerk zunehmend verschwenkt wird (siehe etwa Drehwinkel 45° gemäß der Fig. 8), bis der durchtrennte Baumstamm im Wesentlichen horizontal ausgerichtet ist und am Boden abgelegt werden kann (siehe etwa Drehwinkel 90° gemäß der Fig. 8). Falls das Drehwerk 7 dabei so positioniert ist, dass dessen Drehachse D horizontal orientiert ist, wie es beim Durchtrennen eines Baumstammes der Fall sein wird, wirken hohe Drehmomente auf das Drehwerk 7 und dessen Antrieb 12. Diese Drehmomente können verringert werden, indem beim Umlegen des Baumstammes das Drehwerk 7 mithilfe des Auslegerarmes 9 so verschwenkt wird, dass dessen Drehachse D vertikal orientiert ist, wie in der Fig. 5 ersichtlich ist, da in diesem Fall die aufgrund des Eigengewichts des durchtrennten Baumstammes wirkenden Kräfte im Wesentlichen vom Befestigungselement 8 und dem Auslegerarm 9 aufgenommen werden. Eine solche koordinierte Steuerung des Auslegerarmes 9 mit dem Drehwerk 7 erfordert jedoch hohes Geschick der Bedienperson.

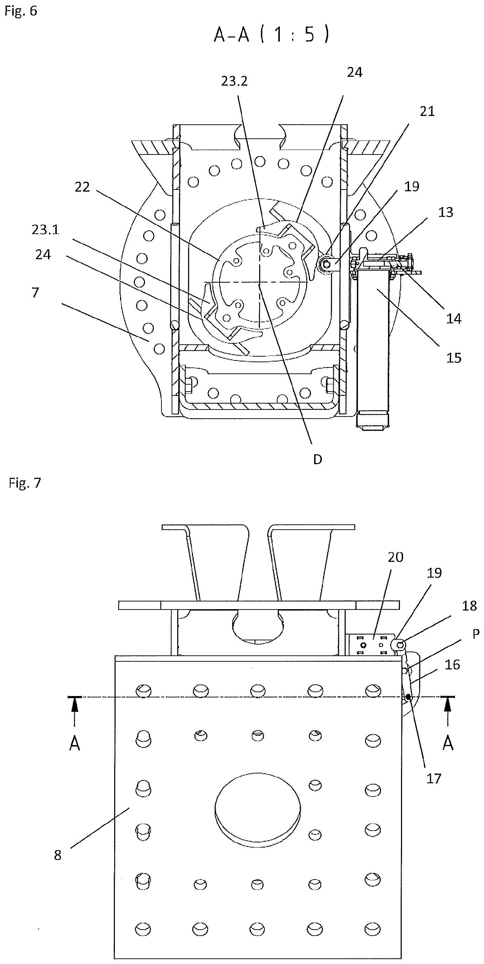

Starke Belastungen des Drehwerks 7 und seines Antriebes 12 können daher in der Praxis nicht vermieden werden. Eine ausreichende Schmierung des Drehwerks 7 und seines Antriebes 12 mit einem entsprechenden Schmiermittel ist daher entscheidend. Hierfür ist ein Schmiermittelzylinder 13 mit einem Verdrängerkolben 14 vorgesehen, wie in der Fig. 6 ersichtlich ist. Der Verdrängerkolben 14 kann im Schmiermittelzylinder 13 so bewegt werden, dass er bei einem Verdrängerhub Schmiermittel aus dem Schmiermittelzylinder 13 über Schmiermittelleitungen (in der Fig. 6 und 7 nicht ersichtlich) dem Drehkranz 7 und seinem Antrieb 12 zuführt. Insbesondere werden die Schmiermittelleitungen zum Schneckentrieb sowie zu inneren Drehkugellager des Antriebes 12 führen. Der Verdrängerkolben 14 ist ferner mit einem rückstellenden Element versehen, das den Verdrängerkolben 14 nach einem Verdrängerhub wieder in eine Ausgangsstellung zurück bewegt. Ferner ist ein Vorratsbehälter 15 vorgesehen, der den Schmiermittelzylinder 13 mit Schmiermittel versorgt. Eine solche Anordnung aus Schmiermittelzylinder 13, Verdrängerkolben 14 mit rückstellendem Element und Vorratsbehälter 15 ist an sich bekannt.

Der Schmiermittelzylinder 13 mit dem Verdrängerkolben 14 und der Vorratsbehälter 15 sind am Befestigungselement 8 angeordnet. Der Verdrängerkolben 14 wird dabei über eine Stellmechanik betätigt, die im Folgenden erläutert werden soll. Die Stellmechanik umfasst zunächst einen zweiarmigen Hebel 16, der um einen Drehpunkt P drehbar gelagert ist (siehe Fig. 7). Ein außerhalb des Schmiermittelzylinders 13 liegendes Ende des Verdrängerkolbens 14 ist dabei mit einem ersten Ende des Hebels 16 über ein erstes Gelenk 17 verbunden. Ein zweites Ende des Hebels 16 ist über ein zweites Gelenk 18 mit einem ersten Ende eines als Schubstange ausgeführten Stellelements 19 gelenkig verbunden. Das Stellelement 19 ist in einer Führung 20 linear beweglich gelagert und ist an seinem zweiten Ende mit einer Rolle 21 versehen, wie in der Fig. 6 ersichtlich ist. Der Hebel 16 und die Führung 20 für das Stellelement 19 sind jeweils am Befestigungselement 8 angeordnet.

Anhand der Fig. 6 wird in weiterer Folge erläutert, wie gemäß der gezeigten Ausführungsform eine Drehbewegung des Greif- und Schneidwerks in eine Hubbewegung des Verdrängerkolbens 14 umgesetzt wird. Hierfür sind an der Drehdurchführung 22 für die hydraulischen Leitungen des Greif- und Schneidwerks zwei Drehelemente 23.1 und 23.2 befestigt. Diese Drehelemente 23.1 und 23.2 werden bei einer Drehbewegung des Greif- und Schneidwerks um die Drehachse D mitbewegt und weisen jeweils eine in einem Umfangsbereich des jeweiligen Drehelements 23.1 und 23.2 verlaufende Anlagefläche 24 auf, an der die Rolle 21 des Stellelements 19 anliegt. Die Anlagefläche 24 weist dabei einen variierenden Abstand von der Drehachse D auf.

Bei einer Drehbewegung des Greif- und Schneidwerks um die Drehachse D bewegen sich auch die beiden Drehelemente 23.1 und 23.2 um die Drehachse D. Dabei rollt die Rolle 21 auf der Anlagefläche 24 ab und wird daher von der Anlagefläche 24 in Bezug auf die Fig. 6 nach rechts verdrängt. Diese Stellbewegung überträgt sich über das Stellelement 19 auf den Hebel 16 und bewegt in weiterer Folge den Verdrängerkolben 14 in Bezug auf die Fig. 7 nach links. Auf diese Weise wird Schmiermittel aus dem Schmiermittelzylinder 13 in die Schmiermittelleitungen und in weiterer Folge auf die zu schmierenden Stellen gepresst. Bei einer weiteren Drehbewegung übt die Anlagefläche 24 bei Überschreiten einer maximalen Auslenkung des Stellelements 19 keine Stellkraft auf das Stellelement 19 mehr aus, sodass das Stellelement 19 aufgrund des rückstellenden Elements für den Verdrängerkolben 14 und über den Hebel 16 wieder in eine Ausgangsstellung bewegt wird.

Mithilfe einer geeigneten Wahl der Anlagefläche 24 können der Hub des Verdrängerkolbens 14 und somit auch die Menge und der drehwinkelabhängige Verlauf der Schmiermittelförderung gestaltet werden. Bei einer Ausführung der Drehelemente 23.1 und 23.2 und ihrer Anlageflächen 24 gemäß der Fig. 6 ergibt sich etwa eine drehwinkelabhängige Schmiermittelförderung gemäß der Fig. 8. Die Fig. 8 zeigt auf der Horizontalachse den Drehwinkel des Greif- und Schneidwerks um die Drehachse D, und die Vertikalachse den Hub des Verdrängerkolbens 14, der mit der Menge des geförderten Schmiermittels korreliert. Es ist ersichtlich, dass bei einem Drehwinkel von 90° und 270°jeweils ein Maximum des Verdrängerhubs des Verdrängerkolbens 14 durchlaufen wird, die in der Regel auch jenen Stellungen entsprechen, bei denen maximale Drehmomente auf das Drehwerk 7 wirken. Für einen ökonomischen Schmiermitteleinsatz ist es jedoch auch vorteilhaft, wenn Minima der Schmiermittelförderung durchlaufen werden, was bei der gezeigten Fördercharakteristik bei 0°, 180° und 360° der Fall ist.

Auf diese Weise kann eine automatische Schmierung sicher gestellt werden, die stets dann vorgenommen wird, wenn eine Drehbewegung des Greif- und Schneidwerks erfolgt, da der Verdrängerkolben 14 zur Förderung des Schmiermittels von den mit der Drehbewegung des Greif- und Schneidwerks mitbewegten Drehelementen 23.1 und 23.2 betätigt wird. Ein zusätzlicher Bedienungsaufwand für die Schmierung während des Betriebes der Arbeitsmaschine ist hierfür nicht erforderlich. Die Schmierung wird vielmehr durch eine einfache Stellmechanik initiiert, die an die Drehbewegung des Greif- und Schneidwerks gekoppelt ist.

## Patentansprüche

1. Vorrichtung zur Bearbeitung von land- und forstwirtschaftlichem Schnittgut, insbesondere zum Schneiden von Bäumen, mit einem Greif- und Schneidwerk, das mittels eines Befestigungselements (8) am Auslegerarm (9) einer Arbeitsmaschine (10) befestigbar ist, wobei zwischen dem Befestigungselement (8) und dem Greif- und Schneidwerk ein Drehwerk (7) mit einem Antrieb (12) zur Erzeugung einer Drehbewegung des Greif- und Schneidwerks relativ zum Befestigungselement (8) um eine Drehachse (D) des Drehwerks (7) angeordnet ist, **dadurch gekennzeichnet, dass** am Befestigungselement (8) ein Schmiermittelzylinder (13) angeordnet ist, der über zumindest eine Schmiermittelleitung mit dem Drehwerk (7) und/oder seinem Antrieb (12) verbunden ist, wobei der Schmiermittelzylinder (13) einen Verdrängerkolben (14) zur Förderung des Schmiermittels über die zumindest eine Schmiermittelleitung aufweist, der mittels zumindest eines mit der Drehbewegung des Greif- und Schneidwerks mitbewegten Drehelements (23.1, 23.2) betätigt wird.

2. Vorrichtung nach Anspruch 1, **dadurch gekennzeichnet, dass** das Drehelement (23.1, 23.2) mit dem Verdrängerkolben (14) über eine die Drehbewegung des Drehelements (23.1, 23.2) in eine Hubbewegung des Verdrängerkolbens (14) übersetzende Stellmechanik verbunden ist.

3. Vorrichtung nach Anspruch 1 oder 2, **dadurch gekennzeichnet, dass** die Rotationsachse des zumindest einen Drehelements (23.1, 23.2) die Drehachse (D) des Drehwerks (7) ist und das Drehelement (23.1, 23.2) eine in einem Umfangsbereich des Drehelements (23.1, 23.2) verlaufende Anlagefläche (24) für ein mit dem Verdrängerkolben (14) verbundenes und linear bewegliches Stellelement (19) aufweist, wobei die Anlagefläche (24) einen variierenden Abstand von der Drehachse (D) aufweist.

4. Vorrichtung nach Anspruch 3, **dadurch gekennzeichnet, dass** das Stellelement (19) über eine Rolle (21) an der Anlagefläche (24) anliegt.

5. Vorrichtung nach Anspruch 3 oder 4, **dadurch gekennzeichnet, dass** das Stellelement (19) über einen Hebel (16) mit dem Verdrängerkolben (14) verbunden ist.

6. Arbeitsmaschine (10) mit einem Auslegerarm (9) und einer am Auslegerarm (9) befestigten Vorrichtung nach einem der Ansprüche 1 bis 5.

## Claims

1. Device for processing agricultural and forestry cuttings, in particular for cutting trees, having a gripping and cutting mechanism, which can be fastened by means of a fastening element (8) to the boom arm (9) of a working machine (10), wherein between the fastening element (8) and the gripping and cutting mechanism a slewing gear (7) with a drive (12) is arranged for generating a rotary movement of the gripping and cutting mechanism relative to the fastening element (8) about an axis of rotation (D) of the slewing gear (7), **characterized in that** a lubricant cylinder (13) is arranged on the fastening element (8), which is connected via at least one lubricant line to the slewing gear (7) and/or its drive (12), wherein the lubricant cylinder (13) has a displacement piston (14) for conveying the lubricant via the at least one lubricant line, which is actuated by means of at least one rotary element (23.1, 23.2) which is co-moved with the rotary movement of the gripping and cutting mechanism.

2. Device according to claim 1, **characterized in that** the rotary element (23.1, 23.2) is connected to the displacement piston (14) via an actuating mechanism translating a rotational movement of the rotary element (23.1, 23.2) into a lifting movement of the displacement piston (14).

3. Device according to claim 1 or 2, **characterized in that** the axis of rotation of the at least one rotary element (23.1, 23.2) is the axis of rotation (D) of the slewing gear (7) and the rotary element (23.1, 23.2) comprises a contact surface (24) extending in a circumferential region of the rotary element (23.1, 23.2) for a linearly movable actuating element (19) which is connected to the displacement piston (14), wherein the contact surface (24) has a varying distance from the axis of rotation (D) .

4. Device according to claim 3, **characterized in that** the actuating element (19) rests against the contact surface (24) via a roller (21).

5. Device according to claim 3 or 4, **characterized in that** the actuating element (19) is connected via a lever (16) to the displacement piston (14).

6. Work machine (10) having a boom arm (9) and a device according to one of the claims 1 to 5 which is attached to the boom arm (9).

## Revendications

1. Dispositif pour traiter des matières à couper agricoles et forestières, en particulier pour couper des arbres, comportant une unité de préhension et de coupe qui peut être fixée au bras en porte-à-faux (9) d'une machine de travail (10) au moyen d'un élément de fixation (8), une unité de rotation (7) comportant un entraînement (12) étant disposée entre l'élément de fixation (8) et l'unité de préhension et de coupe pour produire un mouvement de rotation de l'unité de préhension et de coupe par rapport à l'élément de fixation (8) autour d'un axe de rotation (D) de l'unité de rotation (7), **caractérisé en ce qu'**un cylindre de lubrifiant (13) est disposé sur l'élément de fixation (8), lequel est relié à l'unité de rotation (7) et/ou à son entraînement (12) par l'intermédiaire d'au moins une conduite de lubrifiant, le cylindre de lubrifiant (13) présentant un piston déplaceur (14) pour transporter le lubrifiant par ladite au moins une conduite de lubrifiant, lequel est actionné au moyen d'au moins un élément rotatif (23.1, 23.2) déplacé conjointement avec le mouvement de rotation de l'unité de préhension et de coupe.

2. Dispositif selon la revendication 1, **caractérisé en ce que** l'élément rotatif (23.1, 23.2) est relié au piston déplaceur (14) par l'intermédiaire d'un mécanisme de réglage qui traduit le mouvement de rotation de l'élément rotatif (23.1, 23.2) en un mouvement de translation du piston déplaceur (14).

3. Dispositif selon la revendication 1 ou 2, **caractérisé en ce que** l'axe de rotation dudit au moins un élément rotatif (23.1, 23.2) est l'axe de rotation (D) de l'unité de rotation (7) et l'élément rotatif (23.1, 23.2) présente une surface d'appui (24) s'étendant dans une zone périphérique de l'élément rotatif (23.1, 23.2) pour un élément de réglage (19) relié au piston déplaceur (14) et mobile linéairement, la surface d'appui (24) présentant une distance variable par rapport à l'axe de rotation (D).

4. Dispositif selon la revendication 3, **caractérisé en ce que** l'élément de réglage (19) s'applique contre la surface d'appui (24) par l'intermédiaire d'un rouleau (21).

5. Dispositif selon la revendication 3 ou 4, **caractérisé en ce que** l'élément de réglage (19) est relié au piston déplaceur (14) par l'intermédiaire d'un levier (16).

6. Machine de travail (10) dotée d'un bras en porte-à-faux (9) et d'un dispositif selon l'une des revendications 1 à 5 fixé au bras en porte-à-faux (9).
